# EUROPEAN PATENT SPECIFICATION

(11) **EP 3 499 605 B1**
(45) Date of publication and mention of the grant of the patent: **29.07.2026**
(21) Application number: 18209830.1
(22) Date of filing: 03.12.2018
(51) Int. Cl.: H01M 50/296

(54) **TRANSPORT CONTAINER COMPRISING AN ASSEMBLY FOR STORING AND TRANSPORTING ELECTRICAL ENERGY**
TRANSPORTBEHÄLTER MIT EINER ANORDNUNG ZUM SPEICHERN UND TRANSPORTIEREN VON ELEKTRISCHER ENERGIE
CONTENEUR DE TRANSPORT COMPRENANT UN ENSEMBLE DE STOCKAGE ET DE TRANSPORT D'ÉNERGIE ÉLECTRIQUE

(30) Priority: 08.12.2017 NL 2020046
(43) Date of publication of application: 19.06.2019
(73) Proprietor: Bredenoord B.V., 7325 WT Apeldoorn (NL)
(72) Inventor: BRESSER, Marinus Christiaan, 7325 WT APELDOORN (NL); KEURHORST, Evert Hendrik, 7325 WT APELDOORN (NL); HULLEGIE, Johannes Heinrich Franz, 7325 WT APELDOORN (NL); VAN WOLFSWINKEL, Breunis, 7325 WT APELDOORN (NL)
(74) Representative: V.O.

(56) References cited:
- WO-A1-2010/016771
- WO-A1-2013/054686
- DE-A1- 102010 035 959
- JP-A- 2000 048 867
- US-A1- 2002 192 543
- US-A1- 2004 053 127
- US-A1- 2014 097 797

## Description

### BACKGROUND

The invention relates to an assembly for storing and transporting electrical energy, preferably arranged in a universal ISO transport container. In particular, the invention relates to a mobile transport container comprising an electrical energy storage system which is able to be deployed as a fully stand-alone system.

US 2012/0251259 Al disclosed a transportable storage installation, preferably a transport container or a prefabricated shelter, with a length of at least 6 meters, comprising a plurality of racks. Each rack is intended to contain batteries and comprises at least one face for inserting the batteries into the rack. The racks are grouped in a transportable container which can be transported towards a given location. It is specified that the transportable storage installation may be displaced from one location to another, for example via a road, via a railway or be sea, and that during the transport, the batteries are stored in the installation. The arrangements as disclosed in US 2012/0251259 Al allows an increase in the number of racks per unit surface in said transportable storage installation, and thus to increase the amount of energy that can be stored in said installation.

US2004053127A1, forming the basis for the preamble of claim 1, discloses a container for accumulators equipped with one or more cells, suitable for housing one or more elements of the accumulator and defined by walls of which one is equipped with one flexible support tab, for one or more elements, which substantially extends on a vertical plane.

US2014/097797 A1 discloses an energy storage system. The energy storage system may include a power control module coupled to a plurality of energy modules each including a plurality of batteries. The plurality of batteries may be placed in a plurality of containers and arranged in a plurality of parallel strings.

WO2010/016771 A1 discloses a system for cooling or heating a battery module, in order to uniformly lower the temperature of the battery module, reduce the overall weight and manufacturing costs and time. The system comprises a battery case having at least one cooling liquid inlet and outlet, at least one battery module arranged within the battery case, the battery module comprising a plurality of battery strings, the battery module (1) being fully immersed in the cooling fluid, a tension device (13) being connected to each battery string, the battery strings being arranged in such a way that cooling fluid flow spaces (5) are formed between two adjacent battery strings, a cooling liquid pipe connected to the inlet and outlet of the battery case, thereby forming a closed cooling fluid circuit. A circulating device and a reservoir are connected to the closed cooling fluid circuit, thereby circulating the cooling fluid continuously through the battery module, the closed cooling fluid circuit further being run through a heat exchanger.

DE 10 2010 035959 A1 discloses transporting apparatus for at least one electrochemical energy-storage means that has at least one accommodating means, for accommodating the hazardous substance at least in part, and at least one safety device, for safeguarding against a hazard situation caused by the hazardous substance accommodated.

JP2000 048867 A discloses a battery pack. The battery pack is constituted by layering plural batteries, and a spacer is arranged between the batteries. The spacer is formed of a corrugated plate-like spring and is arranged so that a trough groove extends in the vertical direction. The trough groove is formed as a cooling passage for passing a cooling medium. Fixing plates are arranged on both ends of the plurally layered arranged batteries, and the mutual fixing plates are fixed by screws by extending fixing arms. The batteries are deformed when internal pressure increases at charging time, but pressing force by deformation of the batteries is absorbed by elastic deformation of a spring of the spacer, to thereby prevent the occurrence of looseness in the fixing part of the batteries.

US2002/192543 A1 discloses a battery system having lead-acid cells, vertically upstanding cell support frame for supporting the cells, vertically upstanding members with receptacle means for slidably receiving and retaining vertical cell supports, and manually assemble means for connectively maintaining and spacing the upstanding members for receipt of the cell supports. The cells have horizontal positive and negative sandwiched lead-metal plates contained within a cell case resting on the vertical supports. The case has an expandable region surrounding the terminal for relieving pressure on that terminal from grid expansion while simultaneously maintaining the integrity of the case seal to the terminal. The cell support frame includes an elongated strap external of the case for connecting together terminals of the cell and having an output terminal and a central portion on the strap for electric communication with another battery.

WO2013/054686 A1 discloses a power storage device provided with a case, a first door constituting a surface of the case and capable of being removed from the case, a second door disposed on the opposite side of the first door and capable of pivoting with one side of the case functioning as the axis, and a storage part disposed in the interior of the case and capable of taking a storage battery in and out of the case from the first door.

### SUMMARY OF THE INVENTION

The transportation of an installation containing a large number of batteries is not without risks and is subject to strict safety regulations. Accordingly, it is an object of the present invention to provide an alternative assembly for storing and transporting electrical energy, which allows a more safe transport of a large number of batteries.

According to a first aspect, the present invention provides a transport container comprising an assembly for storing and transporting electrical energy, wherein the transport container comprises at least a bottom, a set of circumferential side walls and a top wall, the assembly comprises one or more racks for holding one or more batteries. The transport container further comprises an inverter and, wherein each of the one or more racks are configured to provide an electrical connection between the one or more batteries in said rack and the inverter via a main supply line, wherein said electrical connection comprises an electrical component which is configured for connecting or disconnecting the one or more batteries with the inverter, wherein the electrical component comprises a switch (33), and wherein the batteries in said rack are connected in series to said electrical component. In the transport container, at least one of the one or more racks is fixedly attached to at least two of the group comprising said bottom and the walls of the transport container, via elastic connecting members. Furthermore, the container comprises a control unit, wherein the control unit is connected to the inverter (35), wherein the control unit is configured to adjust the voltage, the frequency and/or the power factor (cos phi) of the AC output power of the inverter as well as an output connector (41) which is connected to the inverter and is configured for connecting an external load. The control unit is configured to adjust the voltage and/or frequency of the AC output power of the inverter based on an external voltage and/or frequency of an AC power provided to the output connector, and/or the control unit is configured to adjust the power factor of the AC output power of the inverter based on the power factor of the load.

By arranging elastic connecting members between the one or more racks and at least two of the group comprising said bottom, side walls, top wall and any further internal wall of the transport container, the connecting members act as shock absorbers or crushable zone at least during transportation of the transport container, in order to protect the racks and the batteries installed therein and reduce the chance of damage during transport. The elastic connecting members are also arranged between at least two walls of the transport container to substantially fix the position of the racks, also in case of movements in a sideward direction and/or to absorb forces during a leaning or tilting position of the transport container, for example when the transport container is handled by a multilift frame unloading from or loading onto a transport vehicle.

In an embodiment, the at least one of the one or more racks is fixedly attached to the bottom and one of the walls via said elastic connecting members. Preferably, the at least one of the one or more racks is attached to the bottom and one of the side walls via said flexible connecting members. Preferably, the flexible connecting members are arranged at or near a side of the one or more racks which faces away from the bottom, for example at a position near the upper side of the one or more racks. This provides a very stable positioning of the one or more racks inside the transport container.

In an embodiment, the transport container further comprises an internal partition wall, wherein the at least one of the one or more racks is attached to said internal partition wall via said flexible connecting members.

In an embodiment, the transport container comprises two or more racks which are rigidly connected to each other or to a common connection member. In an embodiment, the flexible connecting members are arranged in between the common connection member and one of the at least two of a group comprising said bottom and the walls of the transport container. By providing a substantial rigid interconnection between two or more rack, it can substantially prevented that the racks bump into each other during the transport of the transport container, which in turn can prevent damage to the racks and/or battery units inside the racks. In an embodiment, the flexible connecting members each comprise an elastic mounting.

In an embodiment, the elastic mounting comprises a block, disk or ring of elastic material, such as rubber, which is interposed between the one or more racks and one of the at least two of the group comprising said bottom and the walls of the transport container. In an embodiment, the block, disk or ring of elastic material comprises a convex surface, and wherein the elastic mounting comprises a support plate having a concave surface, wherein the concave surface of the support plate is arranged abutting the convex surface. The support plate is preferably arranged in between the block, disk or ring of elastic material and one of the one or more racks. Alternatively, the support plate is arranged in between the block, disk or ring of elastic material and said one of the at least two of the group comprising said bottom and the walls of the transport container. The elastic mounting according to this embodiment, provides a sturdy and secure mounting which is able to carry the one or more racks which are very heavy when filled with battery units, and which still provide the required elastic mounting in order to act as shock absorbers during transportation of the transport container.

In an embodiment, the elastic mounting comprises a support plate, wherein the support plate is arranged abutting the block, disk or ring of elastic material, wherein the support plate comprises a convex surface at a side facing away from the block, disk or ring of elastic material. It is noted, that the support plate of this embodiment can also be combined with the support plate of the embodiment described immediately above. The convex surface of the support plate allows for a bending flexure of the elastic mounting for absorbing transverse forces.

In an alternative embodiment, the elastic mounting comprises an elastic tube, wherein a circumferential wall of said tube comprises a first position at which the tube is connected to the rack, and a second position at which the tube is connected to one of the at least two of the group comprising said bottom and the walls of the transport container. In a preferred embodiment, the second position is located substantially diametrically opposite on the tube with respect to the first position.

The tubular mountings, in particular said elastic tubes, comprise a centre axis. Preferably, the tubular mountings are arranged such that the centre axes of said tubular mountings are substantially parallel and/or extend in the same direction. Accordingly, the tubular mountings allow a flexible and/or elastic motion between the racks and the transport container in a direction substantially perpendicular said centre axis. In addition, due to the tubular shape of the tubular mountings and the alignment of the tubular mountings, the suspension of the racks in the transport container is substantially rigid in a direction along the centre axis the tubular mountings. Accordingly a motion between the racks and the transport container in the direction along the centre axis is highly suppressed. This allows to closely arrange multiple racks adjacent to each other in a direction along the centre axis, and substantially reducing the risk that adjacent racks bump into each other during transport of the transport container.

In an embodiment, the container further comprises a cooling device for cooling the batteries and/or other equipment inside the container, wherein the cooling device is configured to be powered by the batteries. In an embodiment, the container further comprises a heating device for heating the batteries and/or other equipment inside the container, wherein the heating device is configured to be powered by the batteries. Accordingly, the transport container with the assembly for storing and transporting electrical energy can be operated autonomous, that is without requiring additional power supplies.

In an embodiment, the container comprises an enclosed battery compartment in which the one or more racks for holding one or more batteries are mounted inside said enclosed battery compartment. By confining the batteries in a dedicated enclosed and lockable battery compartment, unauthorised access to the batteries can be prevented.

In an embodiment, the container comprises an inverter, wherein each of the racks are configured to provide an electrical connection between the one or batteries in said rack and the inverter, wherein said electrical connection comprises an electrical component which is configured for connecting or disconnecting the one or more batteries with the inverter. In an embodiment, the electrical component comprises a switch, preferably a contactor. By disconnecting the batteries with the inverter, at least during transportation, the electrical power is confined in the batteries and it can be prevented that other equipment is under electrical power. This strongly increases the safety during transportation.

In an embodiment, the electrical component is arranged in or adjacent to said rack. In an embodiment, the batteries in said rack are connected in series to said electrical component.

In an embodiment, the various components inside said transport container are arranged in said transport container to provide a weight distribution such that the centre of gravity of the assembly of said various components is arranged substantially at or near the centre of the transport container, and preferably substantially at or near the centre of the bottom of said transport container. This facilitates the handling of the transport container during transportation.

According to a second aspect, the present invention provides a method for storing and transporting electrical energy using a transport container as described above, wherein the one or more batteries are fixedly arranged in the racks and are substantially completely charged during the transport towards a user location.

In an embodiment, wherein the container comprises an inverter, wherein each of the racks are configured to provide an electrical connection between the one or batteries in said rack and the inverter, wherein said electrical connection comprises an electrical component which is configured for connecting or disconnecting the one or more batteries with the inverter, the electrical component is configured to disconnect the one or more batteries with the inverter during transportation of the container.

According to a third aspect, the present invention provides a method for coupling at least two transport containers comprising an assembly for storing and transporting electrical energy as described above, wherein the assemblies each comprise an inverter to provide AC output voltages, and wherein the assemblies comprises at least one control unit, wherein the voltages and/or frequencies of the electrical output power of the assemblies in the two transport containers are at least substantially synchronized before the assemblies of both transport containers are activated to supply electrical power to an external load.

In an embodiment, the control unit is configured to adjust the AC voltages delivered by the inverters in order to decrease a voltage difference between said delivered AC voltages.

In an embodiment, the control unit is configured to allocate a reactive power as requested by the external load evenly to both inverters, preferably wherein a power factor of an electrical power delivered by the inverters of the assembly of both transport containers is substantially equal to a power factor of the load.

In an embodiment, the control unit is configured to determine a State Of Charge (SOC) difference between the batteries of the two transport containers of the assembly of the two transport containers, and in case of a SOC difference to increase the power output of the transport container with the highest SOC with a positive load gain. In an embodiment, this load gain is dependent on the SOC difference. In an embodiment, the load gain is proportional to the SOC difference.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1, 2 and 3 show different schematic views of a container according to the invention in which the top wall and some side walls have been removed to provide a view of the interior of the container,
Figure 4 shows a schematic top view of the container of figures 1, 2 and 3,
Figure 5 shows a schematic block diagram of part of the electrical connections in a container, Figure 6 shows a schematic block diagram of an arrangement of two coupled containers,
Figure 7 shows a schematic top view of a second example of a container according to the invention,
Figure 8 shows a schematic view of the battery compartment of the container of figure 7,
Figure 9 shows a schematic view of the mounting of the racks onto the bottom of the container of the example of figure 8,
Figure 10 shows a schematic cross-section of the mounting of figure 9,
Figure 11 shows a schematic view of the mounting of the racks against a side wall of the container of the example of figure 8,
Figure 12 shows a schematic view of the outside of the container, in particular the entrance to the service compartment, and
Figure 13 shows a schematic view of the outside of the container, in particular the entrance to the battery compartment.

### DETAILED DESCRIPTION OF THE INVENTION

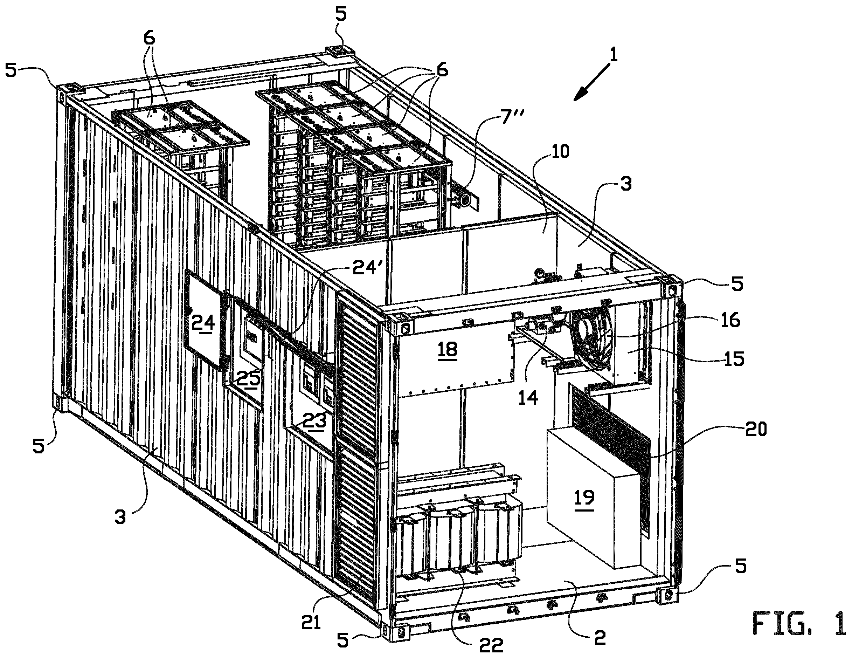

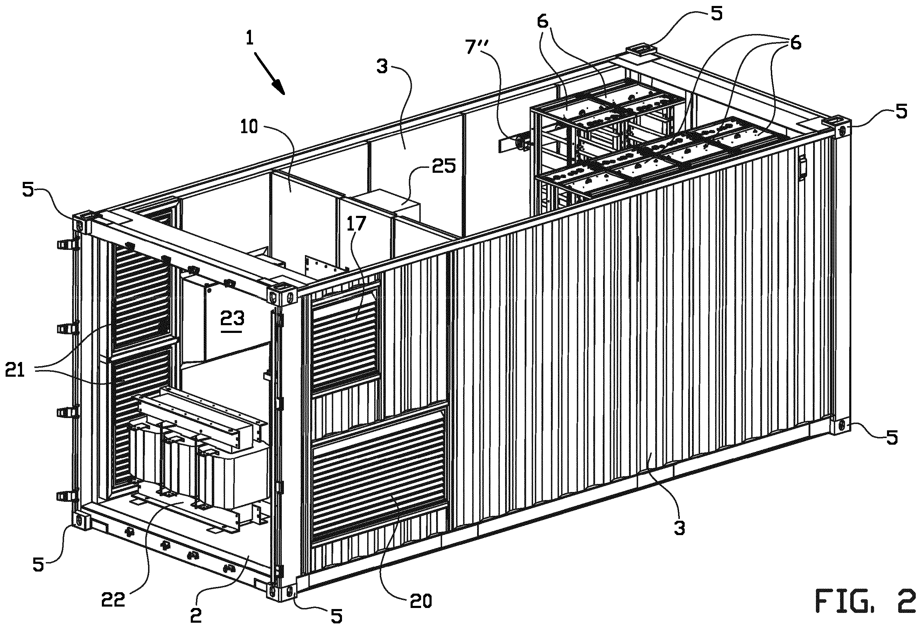

As schematically shown in the example as depicted in figure 1, 2 and 3, the transport container, in particular an intermodular container 1, comprises at least a bottom or bottom wall 2, a set of circumferential side walls 3, 3' and a top wall 4 which together form a rectangular box. Typically but not necessarily, the side walls 3, 3' and top wall 4 are made of corrugated metal plates. On the eight corners of the container 1, castings 5 with openings for twist-lock fasteners are provided for hoisting, stacking and securing.

Inside the container 1, assembly for storing and transporting electrical energy is arranged. The assembly comprises one or more racks 6 for holding one or more batteries (not shown in detail). In the present example the one or more racks 6 comprises 19" standard size racks and the batteries are provided in 19" units which can be slided into the rack along a substantial horizontal track, and which 19" units are secured to the rack 6 by screws. When correctly mounted. Accordingly, the batteries are rigidly connected to the racks 6.

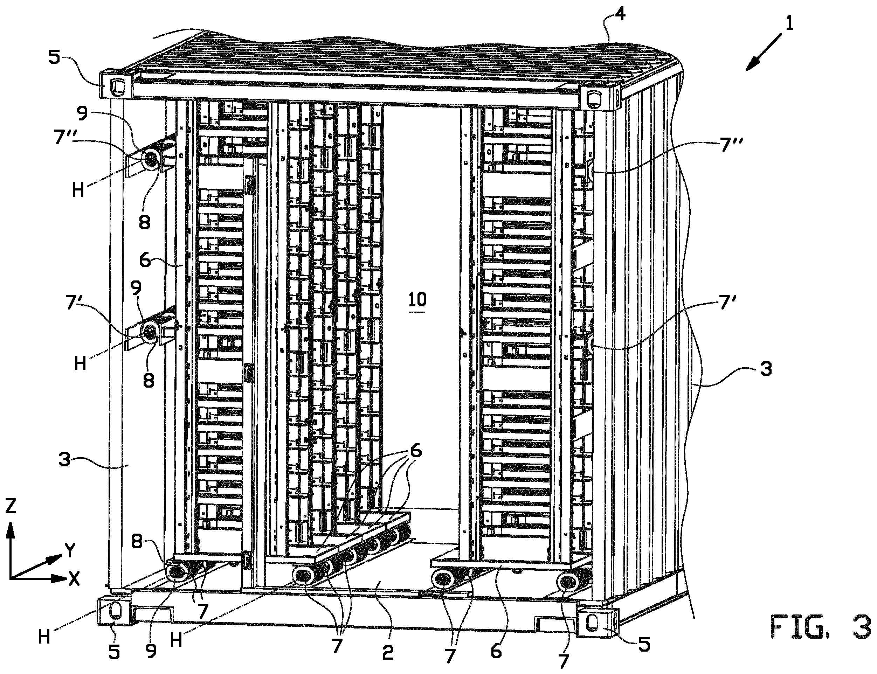

As schematically shown in figures 1 - 4, the racks 6 are attached to at least two walls 2, 3 of the transport container 1 via flexible connecting members 7, 7', 7". In particular, the racks 6 are attached to the bottom wall 2 and one of the side walls 3 via said flexible connecting members 7, 7', 7". As schematically shown in figure 3, four connecting members 7 are arranged between a bottom wall of the rack 6 and the bottom wall 2 of the transport container 1. Two connecting members 7' are arranged between a back side of the rack 6 and a side wall 3 of the transport container 1 at a position approximately half way the vertical height of the rack 6, and two connecting members 7" are arranged between the back side of the rack 6 and the side wall 3 of the transport container 1 at a position near the upper side of the rack 6.

The flexible connecting members 7, 7', 7" each comprise a tubular flexible mounting. The tubular flexible mounting preferably comprises an elastic mounting, preferably an elastic tube or tubular spring Where the elastic mounting comprises an elastic tube, a circumferential wall of said tube comprises a first position 8 at which the tube is connected to the rack 6, and a second position 9 at which the tube is connected to the side wall 3 or the bottom wall 2 of the transport container 1. As schematically shown in figure 3, the second position 9 is located substantially diametrically opposite on the tube with respect to the first position 8.

As schematically shown in figure 3, the tubular flexible mountings are arranged such that the centre axes H of the tubular flexible mountings extend in a longitudinal direction of the transport container 1, in particular along the Y-direction. Accordingly, the racks 6 are suspended by the tubular flexible mountings, which tubular flexible mountings 7, 7', 7" allow a relative motion between the racks 6 and the transport container 1 substantially in a plane perpendicular to the longitudinal direction, in particular substantially in the XZ-plane. Accordingly, the tubular flexible mountings 7, 7', 7" protect in particular the racks 6 and any battery units installed therein from damage and/or wear during the transportation of the transport container 1.

Due to the tubular shape of the flexible mountings 7, 7', 7" and the alignment of the tubular springs, the suspension of the racks 6 in the transport container 1 is substantially rigid in a direction along the centre axis H of the tubular flexible mountings 7, 7', 7". Accordingly a motion between the racks 6 and the transport container 1 in the longitudinal direction of the transport container 1 is highly suppressed, which substantially prevents that adjacent racks 6 bump into each other during transport of the transport container 1, and which allows to arrange the adjacent racks 6 close to each other at least in the direction along the centre axis H of the tubular flexible mountings 7, 7', 7".

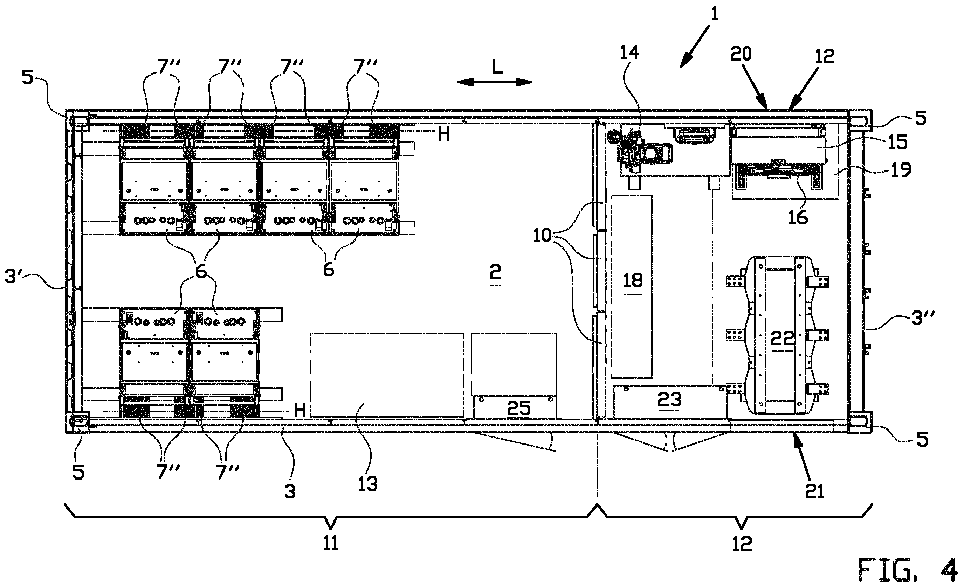

Furthermore, the transport container 1 comprises an internal partition wall 10 which divides the internal space of the container 1 in an enclosed battery compartment 11, as shown in figure 4, inside which enclosed battery compartment 11 the racks 6 for holding one or more batteries are mounted. In addition, the enclosed battery compartment 11 also comprises electrical cabinets 13 which are configured to hold and store, *inter alia,* a controller and/or one or more Inverters.

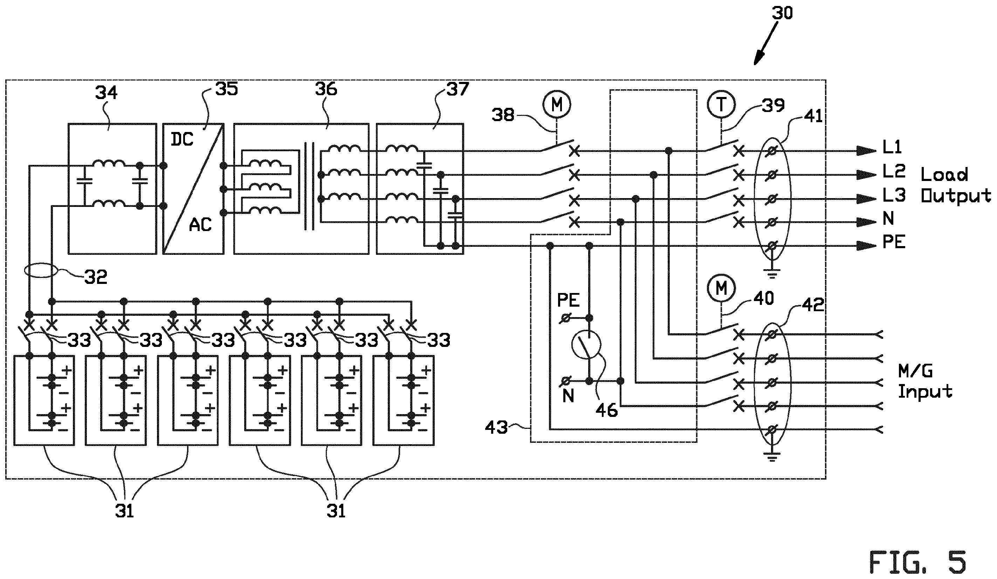

Each of the racks 6 are configured to provide an electrical connection between the batteries in said rack 6 and the inverter. The electrical connection comprises an electrical component which is configured for connecting or disconnecting the one or more batteries with the inverter, as will be explained in more detail below with reference to figure 5.

The container 1 further comprises a separate service compartment 12 which comprises a cooling device for cooling the inverter(s). The inverter(s) is provided with a heat exchange unit which allows a heat exchange fluid to take up heat from the inverter(s). The heat exchange fluid is pumped through a circuit using an inverter cooling pump 14, which circuit is connected to an inverter cooling unit 15 which is provided with an inverter cooling fan 16. The inverter cooling fan 16 draws in air from the surrounding environment of the transport container 1 via intake air grilles 17 which air is used to cool the heat exchange fluid and to expel the heat from the inverter (s).

In addition, the container 1 comprises an air-conditioning unit in this example is a split system which comprises an evaporator 18 and a condensing-unit/heat-pump 19. The evaporator 18 is mounted against the internal partition wall 10, and is arranged to blow heated or cooled air into the battery compartment 11 in order to provide a suitable temperature for the batteries and/or other equipment inside the battery compartment 11 of the transport container 1. The air-conditioning unit is for example configured to provide a stabilised temperature in at least the battery compartment 11 of approximately 23 degrees Celsius. The evaporator 18 is connected to the condensing-unit/heat-pump 19 which is arranged adjacent to intake air grilles 20 arranged in a side wall 3 of said container 1.

Preferably the cooling device and/or the air-conditioning unit are configured to be powered by the batteries in the transport container 1. This allows autonomous operation of the assembly for storing and transporting electrical energy.

At the opposite side wall of the service compartment 12, exhaust air grilles 21 are provided. Inside the service compartment 12, adjacent to the exhaust air grilles 21, a transformer 22 is mounted on the bottom wall 2 of the transport container 1.

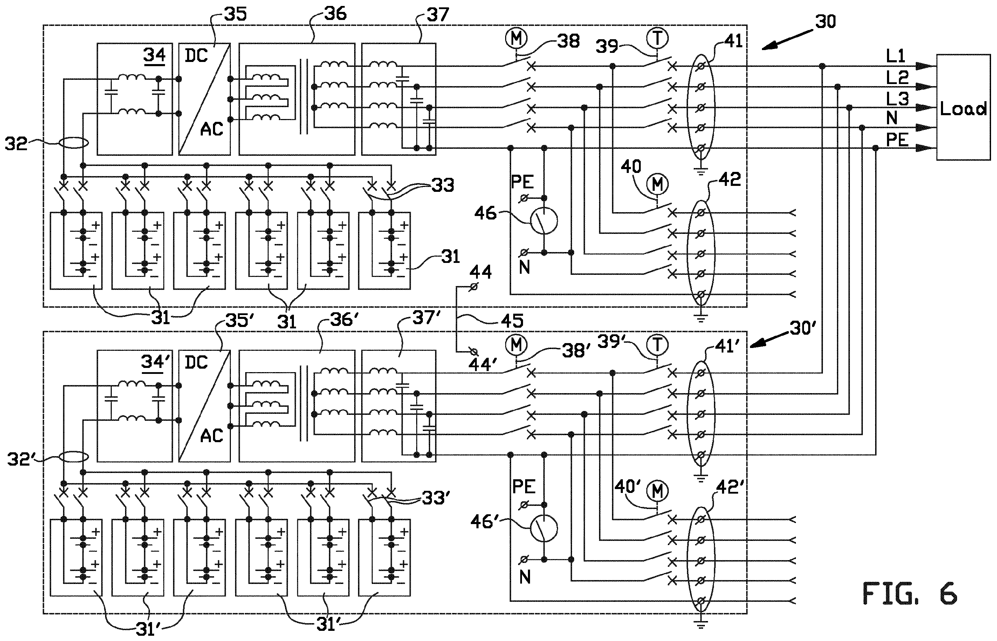

Inside the service compartment 12, a connecting unit 23 is arranged, which is accessible from the outside of the transport container 1 via doors or a flap. The connecting unit 23 comprises one or more outlets or outlet connectors for connecting an external load which is to be supplied with electrical power from the batteries in the transport container 1. The outlets or output connectors are connected to the inverter(s) via the transformer 22 and are configured for connecting an external load. In addition the connecting unit 23 may comprise an input connector for interconnecting one or more further containers with assemblies for storing and transporting electrical energy, as described in more detail below with reference to figure 6.

In addition, the transport container 1, in particular the battery compartment 11, comprises a control panel unit 25, which is accessible from the outside of the transport container 1 via doors or a flap. The control panel inside the control panel unit 25 is arranged to provide information about the status of the assembly for storing and transporting electrical energy and/or the devices in the service compartment 12. In addition, the control panel 25 may be configured as an input terminal for the control unit, which control unit is configured to adjust the voltage and/or frequency of the AC output power of the inverter based on an external voltage and/or frequency of an AC power provided to the output connector, and/or the control unit is configured to adjust the power factor (cos phi) of the AC output power of the inverter based on the power factor of the load connected to the connecting unit 23.

The short or end side wall 3' at the battery compartment 11 is provided with a lockable entrance door (not shown) for entering said battery compartment 11. The short or end side wall 3" at the service compartment is provided with double wing entrance doors (not shown) which are commonly used in transport containers.

Finally it is noted that the distribution of components in the transport container 1 is carefully configured to arrange the centre of gravity of the assembly of components inside said transport container 1, near the centre of the transport container 1. This in particular results in the non-obvious positioning of the heavy components, such as the racks 6 when filled with battery units and the transformer 22 in the transport container 1 as shown in the top view of figure 4.

Figure 5 schematically shows the electrical connections of the assembly 30 for storing and transporting electrical energy, which can be applied in the transport container 1 as described in the example above. The assembly 30 for storing and transporting electrical energy comprises several batteries 31, each of which may be established by series connection of several battery units as for example arranged in a rack 6 of the transport container 1. Each of these batteries 31 is connected to a main supply line 32 via an electrical component, in particular a switch 33, which is configured for connecting or disconnecting the battery 31 with main supply line 32. The switches 33 allow to disconnect the batteries 31 with the main supply line 32, in particular during transport of the transport container 1. Preferably, the switch 33 is arranged in or adjacent to said rack 6. Accordingly, the electrical power is stored and confined in the batteries 31, in particular in the racks 6, during transportation of the transport container 1. This allows safe transportation of the batteries 31 inside the transport container 1, even when they are substantially optimally or fully loaded for providing electrical power at a remote location, even without the need of a connection to the power grid.

Preferably, the switch 33 comprises a contactor which is an electrically controlled switch (relay) used for switching an electrical power circuit. Preferably, the contactors can be controlled from outside the battery compartment 11, for example via the control panel 25.

As schematically shown in figure 5, the main supply line 32 is connected to an inverter 35 via a first filter unit 34. The filter unit is preferably configured for filtering out any peak currents which may be produced by the inverter 35 during the conversion from AC to DC when charging the batteries 31, but also during the conversion from DC to AC when the assembly is delivering power to a load which is connected to the output connectors 41.

The inverter 35 comprises an electronic circuitry that changes direct current (DC) from the batteries 31 to alternating current (AC) to the output connectors 41, which output connectors are arranged in connecting unit 23 as shown in figure 1. For optimal performance, the capacity of the inverter 35 is configured to match the total power that the batteries 31 can deliver in approximately one hour. For example, when the batteries 31 are configured to store an electrical energy of 600 kWh, the inverter 35 is configured to convert an electrical power of 600kW.

The inverter 35 can also be used for charging the batteries 31. When the capacity of the inverter 35 is configured to match the total power that the batteries 31 can deliver in approximately one hour, the capacity of the inverter 35 then also enables to charge the batteries 31 in approximately one hour. Accordingly, when the assembly 30 for storing and transporting electrical energy returns from a user in a state where the batteries 31 is substantially drained, it only takes about one hour to charge the batteries 31 so that the assembly 30 is ready for shipment to the same or another user. As schematically shown in figure 5, the inverter 35 is coupled to a transformer 36 which is preferably configured for adjusting the voltage from the inverter 35 to the desired level for supplying power to an external load. In addition, the transformer 36 is preferably also configured to provide a neutral point or neutral wire N.

Subsequently, a second filter unit 37 is arranged between the transformer 36 and the output connectors 41, which second filter unit 37 comprises a sine wave filter.

As schematically shown in figure 5, a contactor 38 is arranged between the second filter unit 37 and a bus 43, which bus 43 comprises electrical pathways that connect the power storage arrangement comprising the batteries 31, the first filter unit 34, the inverter 35, the transformer 36 and the second filter unit 37, to the output connectors 41 and the input connectors 42. The contactor 38 is configured for coupling or decoupling said power storage arrangement to the bus 43.

On the one hand, the bus 43 is connected to the output connectors 41 via a protection device 39, which preferably comprises a manually controllable fuse or circuit breaker which provides overcurrent protection, for example to limit the output current to 1000 Amps. On the other hand, the bus 43 is connected to the input connectors 42 which allows to connect the power storage arrangement to an external power grid or to an external generator (M/G Input). Between the input connectors 42 and the bus 43 a contactor 40 is arranged, which contactor 40 is configured for coupling or decoupling the input connectors 42 to the bus 43. As further schematically shown in figure 5, the connection 36 with the external load comprises three phase connections L1, L2, L3, a neutral connection N and an earth or ground connection PE. The assembly 30, in particular the bus 43, also comprises a ground switch 46, which allows connecting the earth or ground connection PE with the neutral connection N, if desired. When the ground switch 46 is closed, the neutral connection N is coupled to the ground connection PE of the assembly 30 and the assembly 30 thus provides the earth or neutral potential of the neutral connection N. When the ground switch 46 is open, the neutral connection N is decoupled from the ground connection PE of the assembly 30, which is used, for example, when an external power grid or to an external generator is connected to the input connectors 42 and the contactor 40 is closed, and the earth or neutral potential of the neutral connection N is provided by the neutral of the external power grid or of the external generator.

Figure 6 schematically shows a special feature of the assembly 30 for storing and transporting electrical energy, which the possibility of coupling one or more additional assemblies 30' to said the assembly 30 for storing and transporting electrical energy to increase the amount of electrical energy available for the external load. Such a configuration allows to increase the amount of stored electrical power (kWh) and/or to increase the maximum power (kW) that can be delivered to a user.

When two assemblies 30, 30' are configured to deliver electrical power to a load, the two assemblies 30, 30' are preferably coupled in parallel to the load. Arranging the two assemblies 30, 30' in parallel allows to deliver a maximum electrical power to the load which is equal to the sum of the maximum electrical power of the first assembly 30 and the maximum electrical power of the second assembly 30'. However, in order to supply electrical power to the load, the assemblies 30, 30' must first be synchronized.

One way to synchronize the assemblies 30, 30' is to first activate the output of the first assembly 30, for example by activating the inverter switch 38, and the first assembly 30 is configured to deliver voltages to the external load. Since the load is also connected to the second assembly 30', the same voltages are also delivered to the output connectors 41' of the second assembly 30'. The second assembly 30' is configured to sense the voltages on its input connectors 41' and to adjust the voltages and frequency of its inverter 35' to match the voltages and frequency at its output connectors 41'. When the voltages and frequency of the second assembly 30' substantially match and/or are synchronous with the voltages and frequency of the first assembly 30, the inverter switch 38' of the second assembly 30' is activated to couple the second assembly 30' with the first assembly 30.

Usually, an inverter delivers a stable and constant voltage. However, when coupling two assemblies 30, 30' there usually will be certain differences between the voltages delivered by the two inverters 35, 35'. These voltage differences between the two inverters 35, 35' may result in generating a considerable amount of reactive current and reactive power after the two inverters 35, 35' have been coupled. Accordingly, the control unit(s) of the assemblies 30, 30' is preferably configured to adjust the voltages delivered by the inverter(s) in order to at least substantially prevent the generating of too much reactive power.

Some loads comprise a power factor of less than one, and they actually need a certain amount of reactive power. Accordingly, the control unit(s) are configured to allocate the reactive power as requested by a load evenly to both inverters 35, 35'. If for example the load comprises a power factor or cos phi of 0,85, it is preferred that both inverters 35, 35' also deliver electrical power with a cos phi of 0,85 to obtain a substantial equal current load of the inverters 35, 35'.

Usually, both inverters 35, 35' generate substantially the same frequency. However, when coupling two inverters 35, 35' there usually will be certain differences between the frequencies delivered by the two inverters 35, 35'. This may result in an exchange of electrical power between the two assemblies 30, 30' and/or an uneven distribution of the supplied electrical power from the assemblies 30, 30' to the user. Accordingly, the control unit(s) of the assemblies 30, 30' are preferably configured to measure the electrical power delivered by each of the assemblies 30, 30' and to actively adjust the inverters 35, 35' in order to at least substantially equalise the power output of the assemblies 30, 30'.

An additional problem with the coupling of two assemblies 30, 30' for storing and transporting electrical energy, may arise in case the amount of stored electrical power in the batteries of the two assemblies 30, 30' is not equal. For example, when the State Of Charge (SOC) of the first assembly 30 is 95% and the SOC of the second assembly 30'is 75%, then the second assembly 30' would be depleted much sooner than the first assembly 30 when both provide the same power output. Accordingly, the control unit(s) of the assemblies 30, 30' are preferably configured to determine a SOC difference between the two assemblies 30, 30', and in case of a SOC difference to increase the power output of the assembly 30 with the highest SOC with a positive load gain. Preferably this load gain is dependent on the SOC difference, more preferably the load gain is proportional to the SOC difference. By increasing the power output of the assembly with the highest SOC relative to the power output of the assembly with the lowest SOC, the SOC's of the two assemblies 30, 30' will come together and a depletion of the batteries of the two assemblies 30, 30' occurs substantially at the same time.

In order to realise one or more of the above control methods, the two assemblies 30, 30' comprise a control input/output terminal 44, 44' which allows to provide a communication connection 45 between the two assemblies 30, 30' in order to exchange the necessary data and status between said two assemblies 30, 30'.

The above example of an assembly for storing and transporting electrical energy arranged in a transport container and/or comprising one or more of the above control methods, is in particular highly suitable for use in an off-the-grid electricity system, also known as an island system, stand-alone power system (SAPS or SPS), or remote area power supply (RAPS). Such an off-the-grid electricity system is used for locations that are usually not connected with a public electricity distribution network. In addition the assembly and its control device is preferably configured to use the assembly of the present invention as a separate unit or in a coupled setup where the assembly is coupled with one or more further assemblies or with a generator comprising a combustion engine.

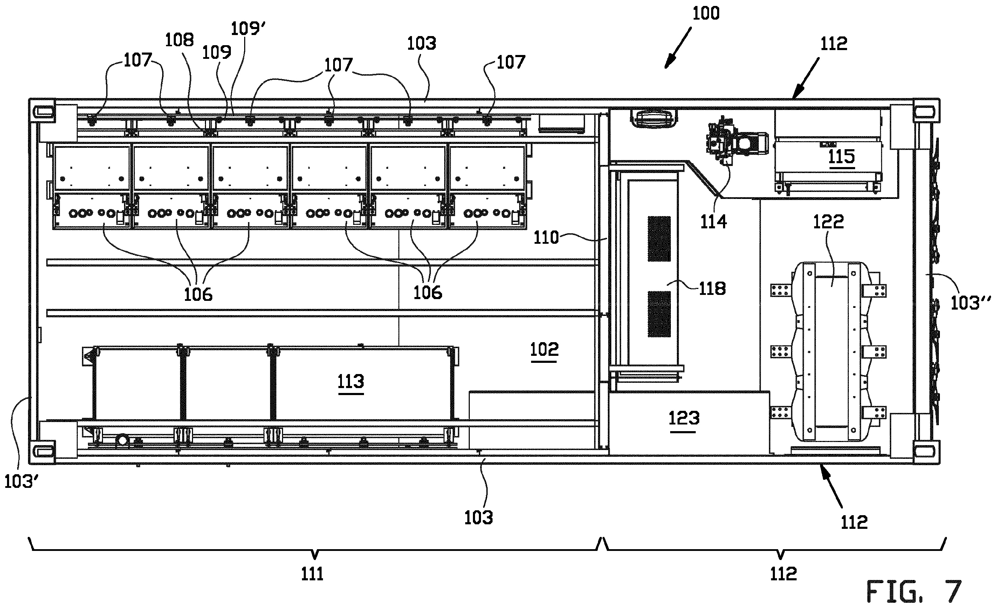

An alternative arrangement of the components inside a transport container 100, in particular the racks 106 for mounting the battery units, is schematically shown in figure 7. The container 100, comprises at least a bottom or bottom wall 102, a set of circumferential side walls 103, 103', 103" and a top wall 104 which together form a rectangular box. The transport container 100 comprises an internal partition wall 110 which divides the internal space of the container 100 in an enclosed battery compartment 111 and a separate service compartment 112.

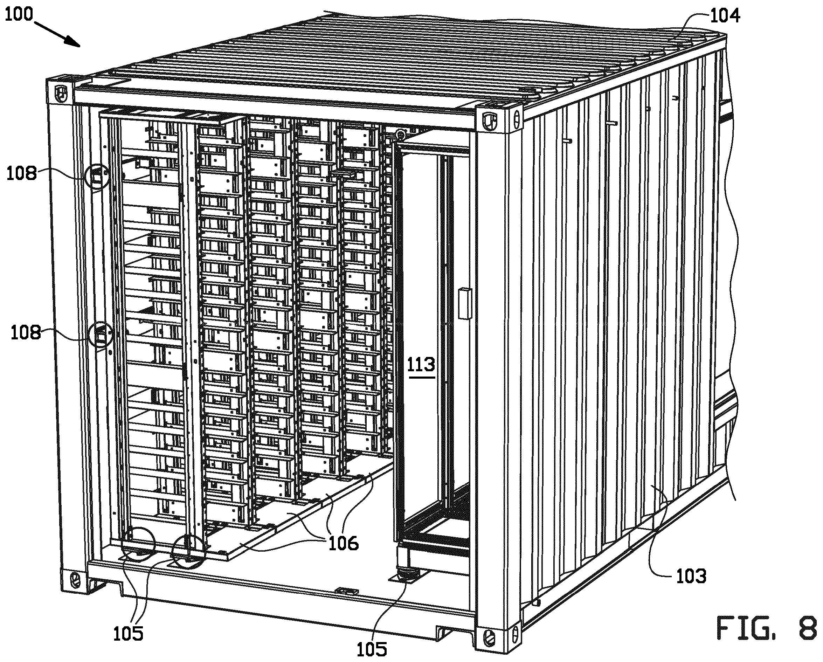

As shown in figures 7 and 8, inside the battery compartment 111, racks 106 for holding one or more batteries are mounted. In addition, the enclosed battery compartment 111 also comprises electrical cabinets 113 which are configured to hold and store, *inter alia,* a controller and/or one or more Inverters.

In this example, the racks 106 are arranged and mounted against one side wall 103, whereas the electrical cabinets 113 are arranged and mounted against an other, opposite, side wall 103. The electrical connection between the racks 106 and the components inside the electrical cabinets 113 is substantially the same as in the examples described above.

The container 100 further comprises a separate service compartment 112 which comprises a cooling device for cooling the inverter(s). The inverter(s) is provided with a heat exchange unit which allows a heat exchange fluid to take up heat from the inverter(s). The heat exchange fluid is pumped through a circuit using an inverter cooling pump 114, which circuit is connected to an inverter cooling unit 115.

In addition, the container 100 comprises an air-conditioning unit in this example is a split system which comprises an evaporator 118 and a condensing-unit/heatpump. The evaporator 118 is mounted against the internal partition wall 110, and is arranged to blow heated or cooled air into the battery compartment 111 in order to provide a suitable temperature for the batteries and/or other equipment inside the battery compartment 111 of the transport container 100. The side walls 103 of the service compartment 112 are provided with air grilles 112, 117, 120, 121 to enable the intake and/or the exhaust of air.

Inside the service compartment 112, adjacent to the air grilles 121, a transformer 122 is mounted on the bottom wall 2 of the transport container 1. Furthermore, the container comprises a connecting unit 123, which is accessible from the outside of the transport container 100 via a door 124. The connecting unit 123 comprises one or more outlets or outlet connectors for connecting an external load which is to be supplied with electrical power from the batteries in the transport container 100, and a control panel unit. The control panel unit is preferably configured to provide information about the status of the assembly for storing and transporting electrical energy and/or the devices in the service compartment 112. In addition, the control panel unit may be configured as an input terminal for a control unit, which control unit is preferably arranged in one of the electrical cabinets 113 and is configured to adjust the voltage and/or frequency of the AC output power of the inverter based on an external voltage and/or frequency of an AC power provided to the output connector, and/or the control unit is configured to adjust the power factor (cos phi) of the AC output power of the inverter based on the power factor of the load connected to the connecting unit 123.

Inside battery compartment 111 of the container 100, an assembly for storing and transporting electrical energy is arranged. The assembly comprises one or more racks 106 for holding one or more batteries (not shown in detail). Also in this example, the one or more racks 106 comprises 19" standard size racks and the batteries are provided in 19" units which can slide into the rack along a substantial horizontal track, and which 19" units are secured to the rack 106 by screws. When correctly mounted, the batteries are rigidly connected to the racks 106.

As schematically shown in figures 7 - 11, the racks 106 are attached to at least two walls 102, 103 of the transport container 100. In this second example, the racks 106 are rigidly connected to a common connection member 109, 1051. Accordingly the racks 106 are rigidly connected to each other via said common connection member 109, 1051. In addition or alternatively, the racks 106 can also be coupled to each other by means of a direct connection between adjacent racks 106. As schematically shown in the figures 7 - 11, the flexible connecting members 107, 105 are arranged in between the common connection member 109, 1051 and a wall 103, 102 of the transport container 100. It is noted that the flexible connecting members 107 between the racks 106 and the side wall 103 is of different construction than the flexible connecting members 105 between the racks 106 and the bottom 102 of the container 100.

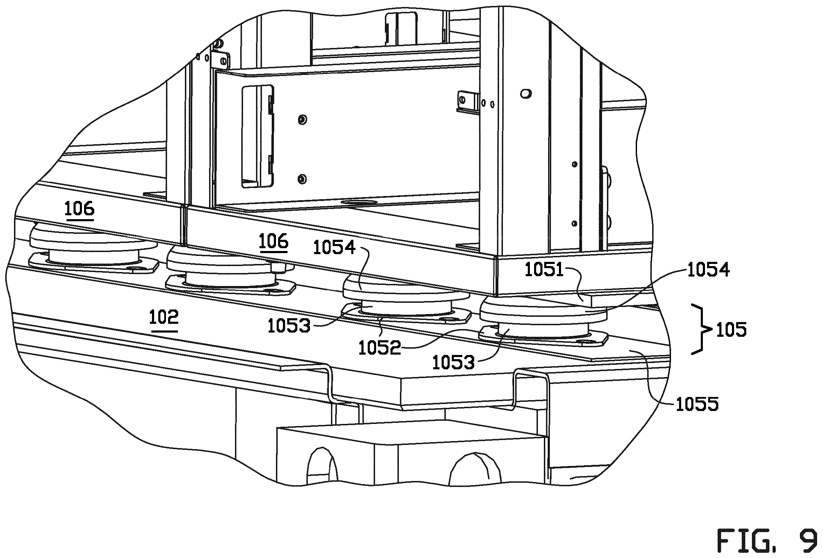

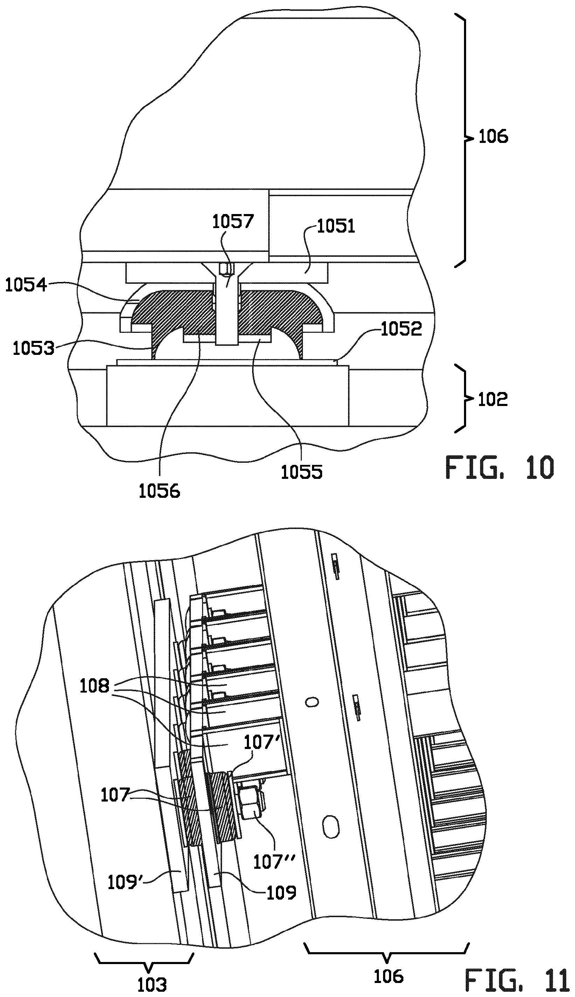

Figures 9 and 10 schematically show a more detail and a cross section view of the flexible connecting members 105 between the racks 106 and the bottom 102 of the container 100. The flexible connecting members 105 comprise a flange 1052 for mounting the flexible connecting member 105 onto the bottom wall 102 of the container 100. Connected to this flange 1052 is a ring-shaped rubber block 1053. The connecting member 105 further comprises a support plate 1054 which is arranged abutting the top surface of the ring-shaped rubber block 1053. At the side of the support plate 1054 facing away from the rubber block 1053, the support plate 1054 is arranged to abut against the common connecting member 1051. The whole assembly of the flexible connecting member 105 is held together by means of a screw 1057 which connects the common connecting member 1051 to an internal flange 1055 via a through-opening in the support plate 1054 and the rubber block 1053, 1056. The internal flange 1055 is arranged space apart from the flange 1052, in particular in a direction perpendicular to the bottom 102 of the container 100 to allow for a relative movement between the flange 1052 and the support plate 1054 with the common connecting member 1051.

As schematically shown in figures 9 and 10, the support plate 1054 comprises a convex outer surface, which is arranged at a side of the support plate 1054 which faces the common connecting member 1051. The convex outer surface is arranged at a side of the support plate 1054 which faces away from the ring-shaped rubber block. Accordingly, the convex outer surface allows for a bending flexure of the flexible connecting member 105 in a direction substantially perpendicular to a centre axis, which in the example shown in figure 10 runs through the centre axis of the screw 1057.

Preferably, the ring-shaped rubber block 1053 comprises a convex surface at a side facing the support plate 1054, and the support plate 1054 comprises a concave surface at a side facing the rubber block 1053. The concave surface of the support plate 1054 is arranged abutting the convex surface of the rubber block 1053.

As shown in the figures 9 and 10, the support plate 1054 is arranged between the rubber block 1053 and rack 106. Alternatively, the flexible connecting member 105 can also be used 'up-side-down' to the example in these figures. In this case, the support plate 1054 is arranged in between the rubber block 1053 and the bottom wall 102 of the transport container 100.

Figure 11 shows a schematic drawing of the mounting of the racks 106 against the side wall 103 of the container. The racks 106 are rigidly connected to a common connecting member 109 via brackets 108. In particular, the brackets 108 rigidly connect the back of the racks 106 to the common connecting member 109. As shown in figure 11, the common connecting member 109 is arranged between a series of flexible connecting members. Each of said flexible connecting members comprises two blocks, disks or rings 107 of rubber material, wherein each one of these rubber blocks, disks or rings 107 is arranged on opposite sides of the common connecting member 109. The two rubber blocks, disk or rings 109 are clamped between a flange 107' and a connecting member 109' arranged against the side wall 103 of the container by means of a screw arrangement 107" which extend through the rubber blocks, disks or rings 107 an through a through opening in the common connecting member 109. Preferably the screw arrangement 107" is spaced apart from the common connecting member 109. Accordingly, the common connecting member 109 is coupled to the side wall 103 of the container only via the rubber blocks, disks or rings 107, which provides the elastic mounting.

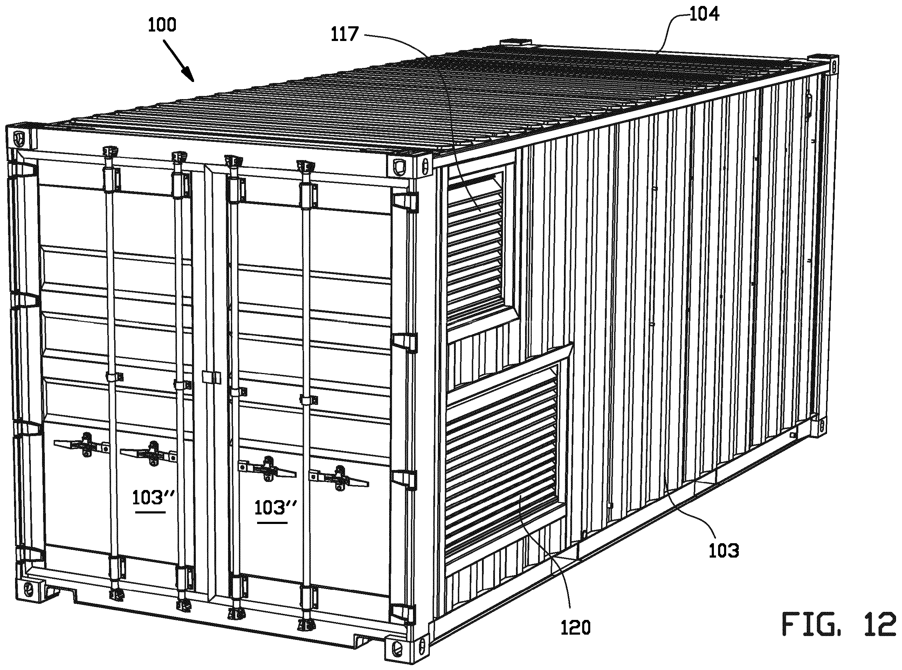

As schematically shown in figure 12, the container 100 comprises two hinged doors 103" at the short end side wall which allow to substantially completely opening this end of the container 100. The hinged doors 103", which are commonly provided in transport containers, allow access to the service compartment of the container.

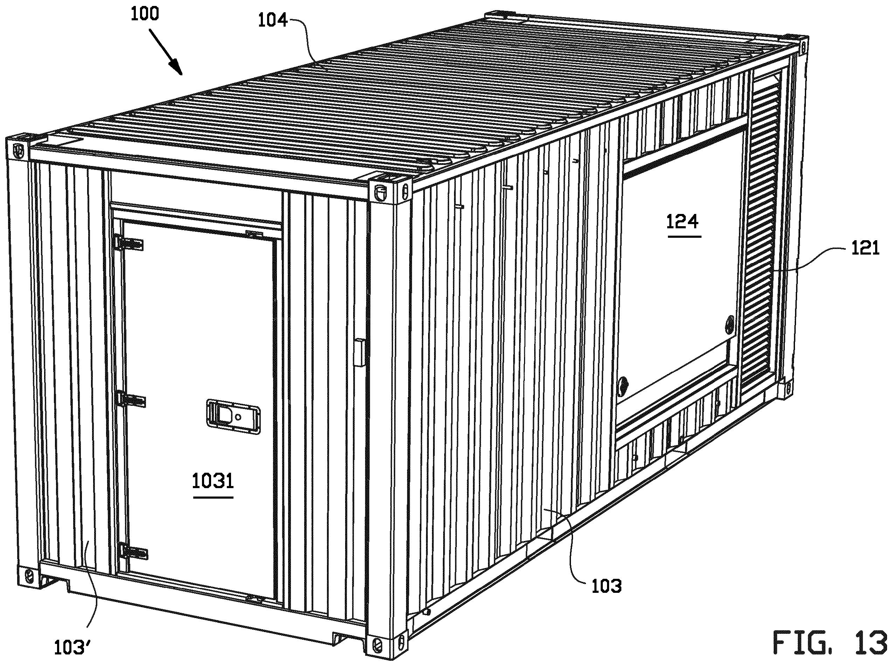

As schematically shown in figure 13, the other short end wall 103' of the container 100, where the battery compartment is located, is provided with a lockable entrance door 1031 for entering said battery compartment. The lockable entrance door 1031 is suitably used to restrict the access to the battery compartment to authorised personnel.

Finally it is noted that the distribution of components in both the transport containers 1, 100 is carefully configured to arrange the centre of gravity of the assembly of components inside said transport container 1, 100 near the centre of the transport container 1, 100. This in particular results in the non-obvious positioning of the heavy components, such as the racks 6, 106 when filled with battery units and the transformer 22, 122 in the transport container 1, 100 as shown in the top view of figures 4 and 7.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined in the claims.

## Claims

1. A transport container (1) comprising an assembly for storing and transporting electrical energy, wherein:
the transport container comprises at least a bottom (2), a set of circumferential side walls (3) and a top wall (4), the assembly comprises one or more racks for holding one or more batteries;
the transport container comprises an inverter (35) and , wherein each of the one or more racks are configured to provide an electrical connection between the one or more batteries in said rack and the inverter via a main supply line (32), wherein said electrical connection comprises an electrical component which is configured for connecting or disconnecting the one or more batteries with the inverter, wherein the electrical component comprises a switch (33), and wherein the batteries in said rack are connected in series to said electrical component;
at least one of the one or more racks is fixedly attached to at least two of the group comprising said bottom and the walls of the transport container, via elastic connecting members;
**characterised in that**
the container comprises a control unit, wherein the control unit is connected to the inverter (35), wherein the control unit is configured to adjust the voltage, the frequency and/or the power factor (cos phi) of the AC output power of the inverter,
the transport container comprises an output connector (41) which is connected to the inverter and is configured for connecting an external load; and
the control unit is configured to adjust the voltage and/or frequency of the AC output power of the inverter based on an external voltage and/or frequency of an AC power provided to the output connector, and/or
the control unit is configured to adjust the power factor of the AC output power of the inverter based on the power factor of the load.

2. The transport container (1) according to claim 1, wherein the at least one of the one or more racks is fixedly attached to the bottom (2) and one of the walls (3), via said resilient connecting members (7, 10, 109, 1051).

3. The transport container (1) according to claim 1 or 2, wherein the transport container further comprises an internal partition wall (10, 110), wherein the at least one of the one or more racks is attached to said internal partition wall via said elastic connecting members (7, 10, 109, 1051).

4. The transport container (1) according to claim 1, 2 or 3, wherein the transport container comprises two or more racks which are rigidly connected to each other or to a common connection member (109, 1051), preferably wherein the elastic connecting members (7, 10, 109, 1051) are arranged in between the common connection member (109, 1051) and one of the at least two of the group comprising said bottom (2) and the walls (3) of the transport container.

5. The transport container (2) according to any one of the claims 1 - 4, wherein the elastic mounting (7, 10, 109, 1051) comprises a block, disk or ring of elastic material, such as rubber, which is interposed between the one or more racks and one of the at least two of the group comprising said bottom (2) and the walls (3) of the transport container.

6. The transport container (1) according to claim 5, wherein the elastic mounting (7, 10, 109, 1051) comprises a support plate, wherein the support plate (1054) is arranged abutting the block, disk or ring of elastic material, wherein the support plate comprises a convex surface at a side facing away from the block, disk or ring of elastic material,
wherein the block, disk or ring of elastic material preferably comprises a convex surface, and wherein the support plate comprises a concave surface, wherein the concave surface of the support plate is arranged abutting the convex surface of the block, disk or ring of elastic material, and
wherein the support plate preferably is arranged in between the block, disk or ring of elastic material and one of the one or more racks, or wherein the support plate is arranged in between the block, disk or ring of elastic material and said one of the at least two of the group comprising said bottom and the walls of the transport container.

7. The transport container (1) according to any one of the claims 1 - 4, wherein the elastic mounting (7, 10, 109, 1051) comprises an elastic tube, wherein a circumferential wall of said elastic tube comprises a first position at which the elastic tube is connected to the rack, and a second position at which the elastic tube is connected to one of the at least two of the group comprising said bottom (2) and the walls (3) of the transport container, preferably wherein the second position is located substantially diametrically opposite on the elastic tube with respect to the firs position.

8. The transport container (1) according to any one of the claims 1 - 7, wherein the container further comprises a cooling device for cooling the batteries and/or other equipment inside the container, wherein the cooling device is configured to be powered by the batteries, and/or
wherein the container further comprises a heating device for heating the batteries and/or other equipment inside the container, wherein the heating device is configured to be powered by the batteries, and/or
wherein the container comprises a enclosed battery compartment in which the one or more racks for holding one or more batteries are mounted inside said enclosed battery compartment.

9. The transport container (1) according to any one of the claims 1 - 8, wherein the various components inside said transport container are arranged in said transport container to provide a weight distribution such that the centre of gravity of the assembly of said various components is arranged substantially at or near the centre of the transport container, and preferably substantially at or near the centre of the bottom of said transport container.

10. A method for coupling at least two transport containers comprising an assembly (30, 30') for storing and transporting electrical energy according to any one of the claims 1 - 9, wherein the assemblies each comprise an inverter (35) to provide AC output voltages, and wherein the assemblies comprise at least one control unit, wherein the voltages and/or frequencies of the electrical output power of the assemblies in the two transport containers are at least substantially synchronized before the assemblies of both transport containers are both activated to supply electrical power to an external load.

11. The method according to claim 10, wherein the control unit is configured to adjust the AC voltages delivered by the inverters (35) in order to decrease a voltage difference between said delivered AC voltages, and/or
wherein the control unit is configured to allocate a reactive power as requested by the external load evenly to both inverters, preferably wherein a power factor of an electrical power delivered by the inverters of the assembly of both transport containers is substantially equal to a power factor of the load, and/or
wherein the control unit is configured to determine a State Of Charge (SOC) difference between the batteries of the two transport containers of the assembly of the two transport containers, and in case of a SOC difference to increase the power output of the transport container with the highest SOC with a positive load gain,
preferably wherein this load gain is dependent on the SOC difference, more preferably wherein the load gain is proportional to the SOC difference.

## Patentansprüche

1. Transportbehälter (1), der eine Anordnung zum Speichern und Transportieren von elektrischer Energie aufweist, wobei
der Transportbehälter mindestens einen Boden (2), einen Satz von Umfangsseitenwänden (3) und eine obere Wand (4) aufweist, die Anordnung ein oder mehrere Gestelle zur Aufnahme einer oder mehrerer Batterien aufweist;
der Transportbehälter einen Wechselrichter (35) aufweist und, wobei jedes der einen oder mehreren Gestelle so konfiguriert ist, dass es eine elektrische Verbindung zwischen der einen oder den mehreren Batterien in dem Gestell und dem Wechselrichter über eine Hauptversorgungsleitung (32) bereitstellt, wobei die elektrische Verbindung ein elektrisches Bauteil aufweist, das so konfiguriert ist, dass es die eine oder die mehreren Batterien mit dem Wechselrichter verbindet oder von diesem trennt, wobei das elektrische Bauteil einen Schalter (33) aufweist, und wobei die Batterien in dem Gestell in Reihe mit dem elektrischen Bauteil verbunden sind;
mindestens eines der Gestelle über elastische Verbindungselemente fest mit mindestens zwei der den Boden und die Wände des Transportbehälters umfassenden Gruppe verbunden ist;
**dadurch gekennzeichnet, dass**
der Behälter eine Steuereinheit aufweist, wobei die Steuereinheit mit dem Wechselrichter (35) verbunden ist, wobei die Steuereinheit so konfiguriert ist, dass sie die Spannung, die Frequenz und/oder den Leistungsfaktor (cos phi) der AC-Ausgangsleistung des Wechselrichters anpasst,
der Transportbehälter einen Ausgangsanschluss (41) aufweist, der mit dem Wechselrichter verbunden und für den Anschluss einer externen Last ausgelegt ist; und
die Steuereinheit so konfiguriert ist, dass sie die Spannung und/oder Frequenz der AC-Ausgangsleistung des Wechselrichters auf der Grundlage einer externen Spannung und/oder Frequenz einer AC-Leistung, die dem Ausgangsanschluss zugeführt wird, anpasst, und/oder
die Steuereinheit so konfiguriert ist, dass sie den Leistungsfaktor der AC-Ausgangsleistung des Wechselrichters auf der Grundlage des Leistungsfaktors der Last anpasst.

2. Transportbehälter (1) nach Anspruch 1, wobei mindestens eines der Gestelle über die elastischen Verbindungselemente (7, 10, 109, 1051) fest mit dem Boden (2) und einer der Wände (3) verbunden ist.

3. Transportbehälter (1) nach Anspruch 1 oder 2, wobei der Transportbehälter ferner eine innere Trennwand (10, 110) aufweist, wobei das mindestens eine der ein oder mehreren Gestelle an der inneren Trennwand über die elastischen Verbindungselemente (7, 10, 109, 1051) befestigt ist.

4. Transportbehälter (1) nach Anspruch 1, 2 oder 3, wobei der Transportbehälter zwei oder mehr Gestelle aufweist, die starr miteinander oder mit einem gemeinsamen Verbindungselement (109, 1051) verbunden sind, wobei die elastischen Verbindungselemente (7, 10, 109, 1051) vorzugsweise zwischen dem gemeinsamen Verbindungselement (109, 1051) und einem der mindestens zwei der Gruppe, die den Boden (2) und die Wände (3) des Transportbehälters umfasst, angeordnet sind.

5. Transportbehälter (2) nach einem der Ansprüche 1 bis 4, wobei die elastische Halterung (7, 10, 109, 1051) einen Block, eine Scheibe oder einen Ring aus elastischem Material, wie z. B. Gummi, aufweist, der zwischen dem einen oder den mehreren Gestellen und einem der mindestens zwei der Gruppe, die den Boden (2) und die Wände (3) des Transportbehälters umfasst, angeordnet ist.

6. Transportbehälter (1) nach Anspruch 5, wobei die elastische Halterung (7, 10, 109, 1051) eine Stützplatte aufweist, wobei die Stützplatte (1054) an dem Block, der Scheibe oder dem Ring aus elastischem Material anliegend angeordnet ist, wobei die Stützplatte an einer von dem Block, der Scheibe oder dem Ring aus elastischem Material abgewandten Seite eine konvexe Oberfläche aufweist,
wobei der Block, die Scheibe oder der Ring aus elastischem Material vorzugsweise eine konvexe Oberfläche aufweist, und wobei die Stützplatte eine konkave Oberfläche aufweist, wobei die konkave Oberfläche der Stützplatte an der konvexen Oberfläche des Blocks, der Scheibe oder des Rings aus elastischem Material anliegt, und
wobei die Stützplatte vorzugsweise zwischen dem Block, der Scheibe oder dem Ring aus elastischem Material und einem der ein oder mehreren Gestelle angeordnet ist, oder wobei die Stützplatte zwischen dem Block, der Scheibe oder dem Ring aus elastischem Material und dem einen der mindestens zwei der Gruppe, die den Boden und die Wände des Transportbehälters umfasst, angeordnet ist.

7. Transportbehälter (1) nach einem der Ansprüche 1 bis 4, wobei die elastische Halterung (7, 10, 109, 1051) ein elastisches Rohr aufweist, wobei eine Umfangswand des elastischen Rohrs eine erste Position aufweist, an der das elastische Rohr mit dem Gestell verbunden ist, und eine zweite Position, an der das elastische Rohr mit einem der mindestens zwei aus der Gruppe, die den Boden (2) und die Wände (3) des Transportbehälters umfasst, verbunden ist, wobei die zweite Position vorzugsweise im Wesentlichen diametral gegenüber der ersten Position auf dem elastischen Rohr angeordnet ist.

8. Transportbehälter (1) nach einem der Ansprüche 1 bis 7, wobei der Behälter ferner eine Kühlvorrichtung zum Kühlen der Batterien und/oder anderer Geräte im Inneren des Behälters aufweist, wobei die Kühlvorrichtung so konfiguriert ist, dass sie von den Batterien gespeist wird, und/oder
wobei der Behälter ferner eine Heizvorrichtung zum Beheizen der Batterien und/oder anderer Geräte im Inneren des Behälters aufweist, wobei die Heizvorrichtung so konfiguriert ist, dass sie von den Batterien gespeist wird, und/oder
wobei der Behälter ein geschlossenes Batteriefach aufweist, in dem das eine oder die mehreren Gestelle zur Aufnahme einer oder mehrerer Batterien innerhalb des geschlossenen Batteriefachs angebracht sind.

9. Transportbehälter (1) nach einem der Ansprüche 1 bis 8, wobei die verschiedenen Komponenten im Inneren des Transportbehälters so angeordnet sind, dass sie eine solche Gewichtsverteilung aufweisen, dass der Schwerpunkt der Anordnung der verschiedenen Komponenten im Wesentlichen in oder nahe der Mitte des Transportbehälters und vorzugsweise im Wesentlichen in oder nahe der Mitte des Bodens des Transportbehälters angeordnet ist.

10. Verfahren zur Kopplung von mindestens zwei Transportbehältern, die eine Anordnung (30, 30') zur Speicherung und zum Transport von elektrischer Energie aufweisen nach einem der Ansprüche 1 bis 9, wobei die Anordnungen jeweils einen Wechselrichter (35) zur Bereitstellung von AC-Ausgangsspannungen aufweisen, und wobei die Anordnungen mindestens eine Steuereinheit aufweisen, wobei die Spannungen und/oder Frequenzen der elektrischen Ausgangsleistung der Anordnungen in den beiden Transportbehältern zumindest im Wesentlichen synchronisiert werden, bevor die Anordnungen beider Transportbehälter aktiviert werden, um elektrische Energie an eine externe Last zu liefern.

11. Verfahren nach Anspruch 10, wobei die Steuereinheit so konfiguriert ist, dass sie die von den Wechselrichtern (35) gelieferten Wechselspannungen anpasst, um eine Spannungsdifferenz zwischen den gelieferten Wechselspannungen zu verringern, und/oder
wobei die Steuereinheit so konfiguriert ist, dass sie eine von der externen Last angeforderte Blindleistung gleichmäßig auf beide Wechselrichter aufteilt, wobei vorzugsweise ein Leistungsfaktor einer von den Wechselrichtern der Anordnung der beiden Transportbehälter gelieferten elektrischen Leistung im Wesentlichen gleich einem Leistungsfaktor der Last ist, und/oder
wobei die Steuereinheit so konfiguriert ist, dass sie einen Ladezustandsunterschied (State of Charge, SOC) zwischen den Batterien der beiden Transportbehälter der Anordnung der beiden Transportbehälter ermittelt und im Falle eines SOC-Unterschieds die Leistungsabgabe des Transportbehälters mit dem höchsten SOC mit einer positiven Lastverstärkung erhöht,
wobei vorzugsweise diese Lastverstärkung von der SOC-Differenz abhängig ist, wobei noch bevorzugter die Lastverstärkung proportional zu der SOC-Differenz ist.

## Revendications

1. Conteneur de transport (1) comprenant un ensemble de stockage et de transport d'énergie électrique, dans lequel :
le conteneur de transport comprend au moins un fond (2), un ensemble de parois latérales circonférentielles (3) et une paroi supérieure (4), l'ensemble comprend un ou plusieurs supports pour maintenir une ou plusieurs batteries ;
le conteneur de transport comprend un onduleur (35) et, chacun des un ou plusieurs supports est configuré pour fournir une connexion électrique entre les une ou plusieurs batteries dans ledit support et l'onduleur via une ligne d'alimentation principale (32), dans lequel ladite connexion électrique comprenant un composant électrique qui est configuré pour connecter ou déconnecter les une ou plusieurs batteries de l'onduleur, dans lequel le composant électrique comprenant un commutateur (33), et dans lequel les batteries dans ledit support sont connectées en série audit composant électrique ;
au moins l'un des un ou plusieurs supports est fixé de manière fixe à au moins deux éléments du groupe comprenant ledit fond et les parois du conteneur de transport, via des éléments de raccordement élastiques ;
**caractérisé en ce que** :
le conteneur comprend une unité de commande, dans lequel l'unité de commande est connectée à l'onduleur (35), dans lequel l'unité de commande est configurée pour régler la tension, la fréquence et/ou le facteur de puissance (cos phi) de la puissance de sortie CA de l'onduleur,
le conteneur de transport comprend un connecteur de sortie (41) qui est connecté à l'onduleur et est configuré pour connecter une charge externe ; et
l'unité de commande est configurée pour régler la tension et/ou la fréquence de la puissance de sortie CA de l'onduleur sur la base d'une tension externe et/ou d'une fréquence externe d'une puissance CA fournie au connecteur de sortie, et/ou l'unité de commande est configurée pour régler le facteur de puissance de la puissance de sortie CA de l'onduleur sur la base du facteur de puissance de la charge.

2. Conteneur de transport (1) selon la revendication 1, dans lequel le au moins un des un ou plusieurs supports est fixé, de manière fixe, au fond (2) et à l'une des parois (3), via lesdits éléments de raccordement résilients (7, 10, 109, 1051).

3. Conteneur de transport (1) selon la revendication 1 ou 2, dans lequel le conteneur de transport comprend en outre une paroi de séparation interne (10, 110), dans lequel le au moins un des un ou plusieurs supports est fixé à ladite paroi de séparation interne via lesdits éléments de raccordement élastiques (7, 10, 109, 1051).

4. Conteneur de transport (1) selon la revendication 1, 2 ou 3, dans lequel le conteneur de transport comprend deux supports ou plus qui sont rigidement connectés les uns aux autres ou à un élément de connexion commun (109, 1051), de préférence dans lequel les éléments de raccordement élastiques (7, 10, 109, 1051) sont disposés entre l'élément de connexion commun (109, 1051) et l'un des au moins deux éléments du groupe comprenant ledit fond (2) et les parois (3) du conteneur de transport.

5. Conteneur de transport (2) selon l'une quelconque des revendications 1 à 4, dans lequel le montage élastique (7, 10, 109, 1051) comprend un bloc, un disque ou un anneau en matériau élastique, tel que le caoutchouc, qui est interposé entre les un ou plusieurs supports et l'un des au moins deux éléments du groupe comprenant ledit fond (2) et les parois (3) du conteneur de transport.

6. Conteneur de transport (1) selon la revendication 5, dans lequel le montage élastique (7, 10, 109, 1051) comprend une plaque de support, dans lequel la plaque de support (1054) est agencée en butée contre le bloc, le disque ou l'anneau en matériau élastique, dans lequel la plaque de support comprend une surface convexe sur un côté orienté à l'opposé du bloc, du disque ou de l'anneau en matériau élastique,
dans lequel le bloc, le disque ou l'anneau en matériau élastique comprend de préférence une surface convexe, et dans lequel la plaque de support comprend une surface concave, dans lequel la surface concave de la plaque de support est agencée en butée contre la surface convexe du bloc, du disque ou de l'anneau en matériau élastique, et
dans lequel la plaque de support est de préférence agencée entre le bloc, le disque ou l'anneau en matériau élastique et l'un des un ou plusieurs supports, ou dans lequel la plaque de support est agencée entre le bloc, le disque ou l'anneau en matériau élastique et ledit un des au moins deux éléments du groupe comprenant ledit fond et les parois du conteneur de transport.

7. Conteneur de transport (1) selon l'une quelconque des revendications 1 à 4, dans lequel le montage élastique (7, 10, 109, 1051) comprend un tube élastique, dans lequel une paroi circonférentielle dudit tube élastique comprend une première position dans laquelle le tube élastique est raccordé au support, et une deuxième position dans laquelle le tube élastique est raccordé à l'un des au moins deux éléments du groupe comprenant ledit fond (2) et les parois (3) du conteneur de transport, de préférence dans lequel la deuxième position est située sensiblement diamétralement à l'opposé sur le tube élastique par rapport à la première position.

8. Conteneur de transport (1) selon l'une quelconque des revendications 1 à 7, dans lequel le conteneur comprend en outre un dispositif de refroidissement pour refroidir les batteries et/ou d'autres équipements à l'intérieur du conteneur, dans lequel le dispositif de refroidissement est configuré pour être alimenté par les batteries, et/ou
dans lequel le conteneur comprend en outre un dispositif de chauffage pour chauffer les batteries et/ou d'autres équipements à l'intérieur du conteneur, dans lequel le dispositif de chauffage est configuré pour être alimenté par les batteries, et/ou
dans lequel le conteneur comprend un compartiment de batterie fermé dans lequel les un ou plusieurs supports pour maintenir une ou plusieurs batteries sont montés à l'intérieur dudit compartiment de batterie fermé.

9. Conteneur de transport (1) selon l'une quelconque des revendications 1 à 8, dans lequel les différents composants à l'intérieur dudit conteneur de transport sont disposés dans ledit conteneur de transport de manière à fournir une répartition de poids telle que le centre de gravité de l'ensemble desdits différents composants est agencé sensiblement au niveau ou à proximité du centre du conteneur de transport, et de préférence sensiblement au niveau ou à proximité du centre du fond dudit conteneur de transport.

10. Procédé pour coupler au moins deux conteneurs de transport comprenant un ensemble (30, 30') de stockage et de transport d'énergie électrique selon l'une quelconque des revendications 1 à 9, dans lequel les ensembles comprennent chacun un onduleur (35) pour fournir des tensions de sortie CA, et dans lequel les ensembles comprennent au moins une unité de commande, dans lequel les tensions et/ou fréquences de la puissance électrique de sortie des ensembles dans les deux conteneurs de transport sont au moins sensiblement synchronisées avant que les ensembles des deux conteneurs de transport soient tous deux activés pour fournir la puissance électrique à une charge externe.

11. Procédé selon la revendication 10, dans lequel l'unité de commande est configurée pour régler les tensions CA délivrées par les onduleurs (35) afin de diminuer une différence de tension entre lesdites tensions CA délivrées, et/ou
dans lequel l'unité de commande est configurée pour répartir une puissance réactive demandée par la charge externe de manière égale aux deux onduleurs, de préférence dans lequel un facteur de puissance d'une puissance électrique délivrée par les onduleurs de l'ensemble des deux conteneurs de transport est sensiblement égal à un facteur de puissance de la charge, et/ou
dans lequel l'unité de commande est configurée pour déterminer une différence d'état de charge (SOC) entre les batteries des deux conteneurs de transport de l'ensemble des deux conteneurs de transport, et dans le cas d'une différence de SOC pour augmenter la puissance de sortie du conteneur de transport ayant le SOC le plus élevé avec un gain de charge positif,
de préférence dans lequel ce gain de charge dépend de la différence de SOC, encore de préférence dans lequel le gain de charge est proportionnel à la différence de SOC.
